# EUROPÄISCHE PATENTSCHRIFT

(11) **EP 3 491 260 B1**
(45) Veröffentlichungstag und Bekanntmachung des Hinweises auf die Patenterteilung: **26.08.2020**
(21) Anmeldenummer: 17745176.2
(22) Anmeldetag: 27.07.2017
(51) Int. Cl.: F16C 9/02, F16C 33/14, F16C 33/10, F16C 17/10, F16C 33/04, F16C 43/02

(54) **GEBAUTE HALBSCHALENFÖRMIGE BUNDLAGERSCHALE**
HALF FLANGED BUSCHING ASSEMBLY
DEMI COQUILLE MONTÉE AVEC FLANCHE

(30) Priorität: 29.07.2016 DE 102016114132
(43) Veröffentlichungstag der Anmeldung: 05.06.2019
(73) Patentinhaber: KS Gleitlager GmbH, 68789 St. Leon-Rot (DE)
(72) Erfinder: BUSCHENHENKE, Frank, 26842 Ostrhauderfehn (DE); SCHROEDER, Hubert, 26903 Surwold (DE); HEGER, Peter, 68789 St. Leon-Rot (DE); SCHIESZL, Steffen, 68789 St. Leon-Rot (DE); REISER, Manuel, 76307 Karlsbad (DE); LANGNER, Heinbert, 33378 Rheda-Wiedenbrueck (DE); TREUTNER, Stefan, 69168 Wiesloch (DE); BURKHART, Stephan, 68789 St. Leon-Rot (DE); SKIADAS, Athanassios, 64297 Darmstadt (DE); FUELLENBACH, Torsten, 69168 Wiesloch (DE); HOENE, Wilfried, 65232 Taunusstein (DE)
(74) Vertreter: DREISS Patentanwälte PartG mbB
(86) Internationale Anmeldenummer: PCT/EP2017/069006
(87) Internationale Veröffentlichungsnummer: WO 2018/019939

(56) Entgegenhaltungen:
- EP-A1- 2 690 295
- AT-A1- 510 062
- DE-A1- 2 433 928
- DE-A1- 3 730 166
- DE-A1-102006 027 500

## Beschreibung

Die Erfindung betrifft eine gebaute halbschalenförmige Bundlagerschale für eine Kurbelwellenlagerstelle bei einem Verbrennungsmotor, mit einer axialen Richtung, einer dazu konzentrischen Umfangsrichtung und einer radialen Richtung, mit einem halbschalenförmigen Radiallagerteil und mit einem im Bereich einer oder beider axialer Stirnseiten des Radiallagerteils befestigbaren scheibenförmigen Axiallagerteil, wobei das Radiallagerteil eine einem Gleitpartner zugewandte radial innere Gleitfläche und einen in Umfangsrichtung erstreckten Randbereich aufweist und wobei das Axiallagerteil im Wesentlichen in einer radialen Ebene, also orthogonal zur axialen Richtung erstreckt ist und mindestens zwei im Wesentlichen in der radialen Ebene erstreckte und nach innen vorspringende Haltezungen aufweist, die mit einer jeweiligen Halteausnehmung in dem Randbereich des Radiallagerteils in Eingriff gebracht sind, wobei das Axiallagerteil verliersicher am Radiallagerteil gehalten ist. Das jeweilige Axiallagerteil soll verliersicher am Radiallagerteil gehalten sein, wobei hierfür keine stoffschlüssige und damit starre Verbindung zwischen dem Axiallagerteil und dem Radiallagerteil vorgesehen werden soll.

Gebaute Bundlagerschalen der vorstehend genannten Art sind bekannt. EP 2 690 295 A1 zeigt eine gattungsgemäß gebaute Bundlagerschale. Typischerweise werden die Axiallagerteile mit einer Umfangslänge von etwa 180° aus einem Flachmaterial ausgestanzt und dann über Haltezungen, die in Halteausnehmungen an dem Radiallagerteil eingreifen, dadurch verliersicher fixiert, dass die Haltezungen oder der Randbereich des Radiallagerteils plastisch verformt werden, so dass ein Hintergriff erzeugt wird. Dies muss auch bei DE 24 33 928 A1 und bei der dort in Bezug genommenen DT 21 40 845 der Fall sein. Auf andere Weise ist nämlich eine bezüglich aller Freiheitsgrade verliersichere Anordnung des betreffenden Axiallagerteils am Radiallagerteil nicht möglich, es sei denn es würden stoffschlüssige Verbindungen zwischen dem Axiallagerteil und dem Radiallagerteil angebracht werden. Durch plastische Verformung geht aber stets die Gefahr der Beeinträchtigung der Maßhaltigkeit der Komponenten im Übrigen einher. Bei der vorgenannten DE 24 33 928 A1 umfasst der Axiallagerteil mehrere in Umfangsrichtung aneinander angrenzende Segmente. Gemäß DE 10 2006 027 500 A1 ist ein 360° umfassender, also geschlossener Axiallagerring durch lösbare oder unlösbare Anbindung, insbesondere Verschweisung, von in Umfangsrichtung aneinander angrenzenden Segmenten gebildet. Eine Anfügung des Axiallagerrings an ein Radiallagerteil ist nicht vorgesehen. WO 2012/129624 A1 zeigt wiederum eine Ausführungsform mit deformierbaren Haltezungen. Gemäß GB 2516294 A wird durch eine kombinierte Fügebewegung aus Zuführen des Axiallagerteils, Verkippen und Hinterhaken an dem Radiallagerteil eine Anordnung erreicht, die aber nicht bezüglich aller Freiheitsgrade verliersicher ist.

Der vorliegenden Erfindung liegt die Aufgabe zugrunde, eine gebaute halbschalenförmige Bundlagerschale der eingangs genannten Art anzugeben, bei der sich das vorstehend geschilderte Problem der Beeinträchtigung der Maßhaltigkeit weniger stellt, wobei das betreffende Axiallagerteil bezüglich aller Freiheitsgrade unverlierbar an dem Radiallagerteil gehalten sein soll, wobei keine stoffschlüssige und damit starre Verbindung zwischen dem Axiallagerteil und dem Radiallagerteil vorgesehen werden soll.
Diese Aufgabe wird durch eine Bundlagerschale der genannten Art gelöst, die dadurch gekennzeichnet ist, dass das Axiallagerteil aus wenigstens drei Segmenten gebildet ist, die in der Umfangsrichtung aneinander anschließen und über eine, vorzugsweise in radialer Richtung erstreckte, Schweißnaht zwischen je zwei Segmenten unlösbar aneinandergefügt sind, wobei die jeweilige Schweißnaht nicht den Radiallagerteil erfasst und wobei die Segmente mit ihren Haltezungen zuerst am Randbereich des Radiallagerteils angeordnet werden, so dass die Haltezungen in die jeweiligen Halteausnehmungen in dem Randbereich des Radiallagerteils eingreifen, und erst dann die jeweilige Schweißnaht zwischen je zwei Segmenten angebracht wird, wodurch dann das so gebildete Axiallagerteil verliersicher jedoch zumindest in axialer Richtung geringfügig spielbehaftet am Radiallagerteil gehalten ist, und zwar ohne dass die Haltezungen oder der Randbereich des Radiallagerteils materialumformend bearbeitet worden sind. Hierbei erweist es sich als vorteilhaft wenn die Halteausnehmungen bei dem Radiallagerteil nicht randoffen sondern als geschlossene Einsteck- oder Durchstecköffnungen ausgebildet sind.
Es kann auf die erfindungsgemäße Weise eine verliersichere, jedoch zumindest axial spielbehaftete Anordnung des Axiallagerteils am Radiallagerteil realisiert werden, und zwar ohne dass materialumformende, insbesondere verstemmende Maßnahmen am Radiallagerteil oder am Axiallagerteil vorgesehen werden. Die Maßhaltigkeit der so gebildeten Bundlagerschale kann daher unproblematischer erhalten werden. Ein weiterer wesentlicher Vorteil der erfindungsgemäßen Bundlagerschale ist darin zu sehen, dass für die Herstellung des Axiallagerteils ein geringerer Verschnitt bei dem Flachmaterial auftritt, verglichen mit der Herausformung von über 180° erstreckten Axiallagerteilen aus dem Flachmaterial.
Eine erfindungsgemäße Bundlagerschale kann auf nur einer Seite oder auf beiden Seiten ein Axiallagerteil aufweisen. Demzufolge kann eine zwei erfindungsgemäße Bundlagerschalen aufweisende Lagerstelle zwei, drei oder vier Axiallagerteile aufweisen.
Es kann sich in Weiterbildung der Erfindung auch als vorteilhaft erweisen, wenn die mehreren Segmente nicht alle aus denselben Materialien oder demselben Materialaufbau gebildet sind. Es wäre beispielsweise denkbar, dass ein mittleres am Scheitel der Bundlagerschale vorgesehenes Segment einen anderen Materialaufbau aufweist als daran angrenzende benachbarte Segmente. Hierdurch kann unterschiedlichen Belastungsgegebenheiten in Abhängigkeit von der Position des Axiallagerteils Rechnung getragen werden.
So kann es sich als vorteilhaft erweisen, wenn mindestens ein Segment aus einem Metall/Kunststoffverbundwerkstoff gebildet ist, während andere Segmente aus Metall oder einem Metallverbundwerkstoff bestehen. Insbesondere kann es sich als vorteilhaft erweisen, wenn der
Metall/Kunststoffverbundwerkstoff eine metallische Stützschicht, insbesondere aus Stahl, eine darauf aufgebrachte dreidimensional poröse Trägerschicht für ein darin einimprägniertes Gleitmaterial auf Polymerbasis, sowie dieses Gleitmaterial, vorzugsweise mit tribologisch wirksamen Füllstoffen aufweist.
Weiter erweist es sich als vorteilhaft, wenn alle Segmente eine vorzugsweise im Wesentlichen nach radial innen erstreckte Haltezunge aufweisen.
Weiter erweist es sich als vorteilhaft, wenn zur Bildung eines jeweiligen Axiallagerteils drei Segmente vorgesehen sind, die vorzugsweise jeweils eine Umfangslänge von 55° - 65°, insbesondere von etwa 60° aufweisen oder dass zwei Segmente eine kürzere Umfangslänge aufweisen als ein zwischen Ihnen liegendes Segment.
Es kann sich auch als vorteilhaft erweisen, wenn Segmente mit unterschiedlicher Umfangslänge vorgesehen sind. Es lassen sich dann, insbesondere in Verbindung mit einer unterschiedlichen Materialwahl spezifischen Bedingungen besser entsprechende Bundlagerschalen herstellen.
Weiter erweist es sich als vorteilhaft, wenn das jeweilige Segment in radialer Richtung außen im Übergang zu einem benachbarten Segment einen Freischnitt aufweist. Durch diese Ausbildung lassen sich die Segmente unter hoher Materialausnutzung eng aneinander anschließend aus dem Flachmaterial herausformen.
Bei sämtlichen erfindungsgemäß ausgebildeten Bundlagerschalen können Schmiermittel zuführende oder aufnehmende Taschen, Öffnungen oder Nuten ausgebildet sein. Gegenstand der Erfindung ist auch ein Verfahren zum Herstellen einer gebauten halbschalenförmigen Bundlagerschale mit den Merkmalen der Ansprüche 8 und 9. Es wird hierbei eine Bundlagerschale erhalten, bei der das jeweilige Axiallagerteil verliersicher am Radiallagerteil gehalten ist, wobei hierfür keine stoffschlüssige und damit starre Verbindung zwischen dem Axiallagerteil und dem Radiallagerteil vorgesehen wird.
Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung.
In der Zeichnung zeigt:
Figur 1 eine perspektivische Ansicht einer erfindungsgemäßen gebauten halbschalenförmigen Bundlagerschale;

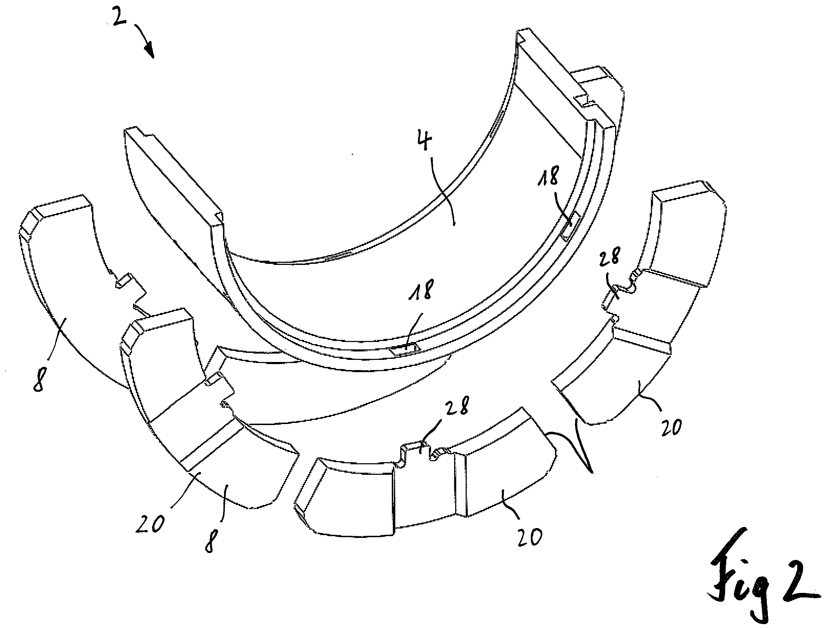

Figur 2 eine explosionsartige Darstellung der Bundlagerschale aus Figur 1;
Figur 3 eine perspektivische Ansicht eines Radiallagerteils der Bundlagerschale nach Figur 1;
Figur 4 eine perspektivische Ansicht eines Segments zur Bildung eines Axiallagerteils der Bundlagerschale nach Figur 1; und
Figur 5 in schematischer Darstellung eine beispielhafte Einteilung eines Stanzbilds eines Flachmaterials zur Herausformung der an jeweiligen Axiallagerteil bildenden Segmente.

Eine insgesamt mit dem Bezugszeichen 2 bezeichnete erfindungsgemäße gebaute halbschalenförmige Bundlagerschale, insbesondere für eine Kurbelwellenlagerstelle bei einem Verbrennungsmotor, umfasst einen halbschalenförmigen, also ungefähr 180° umfassenden Radiallagerteil 4 sowie im beispielhaft dargestellten Fall im Bereich beider axialer Stirnseiten 6 des Radiallagerteils jeweils ein befestigtes Axiallagerteil 8, das häufig auch als Anlaufscheibe bezeichnet wird.

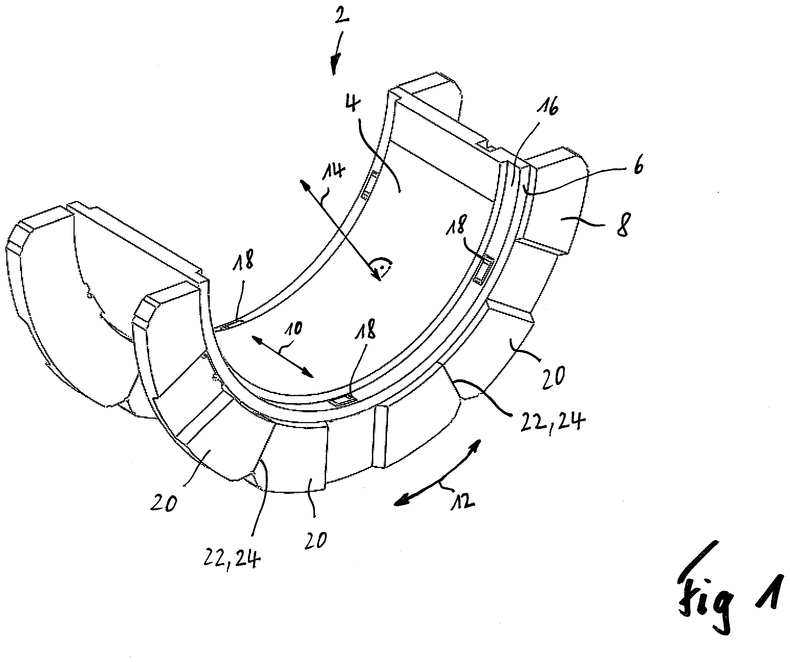

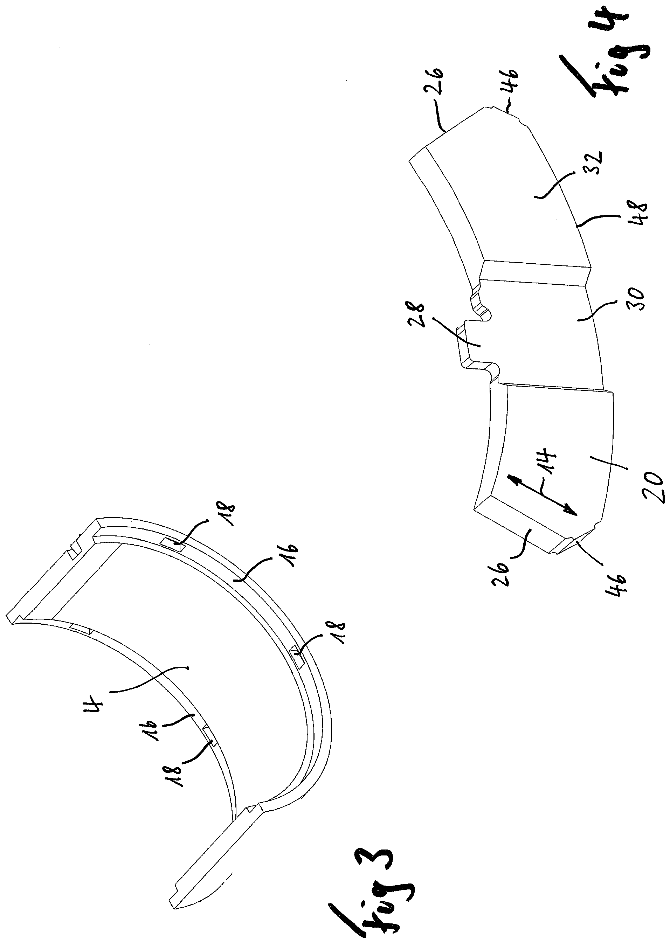

Figur 3 zeigt eine perspektivische Ansicht des Radiallagerteils 4. In Figur 1 ist ferner eine axiale Richtung 10, eine dazu konzentrische Umfangsrichtung 12 und eine radiale Richtung 14 der Bundlagerschale 2 dargestellt.

Man erkennt aus Figur 3, dass in beispielhaft beiden in der Umfangsrichtung 12 erstreckten Randbereichen 16 des Radiallagerteils 4 Halteausnehmungen 18 zur Befestigung des jeweiligen Axiallagerteils 8 vorgesehen sind.

Erfindungsgemäß ist das Axiallagerteil 8 nicht einstückig in der Umfangsrichtung 12 durchgehend ausgebildet, sondern es ist von im dargestellten Fall beispielhaft drei Segmenten 20 gebildet, die zunächst voneinander getrennt hergestellt und erhalten werden und dann in ihrer intendierten Montagestellung im Bereich der axialen Stirnseite 6 des Radiallagerteils 4 angeordnet werden. Erst danach werden sie stoffschlüssig durch eine Schweißverbindung miteinander verbunden. In Figur 1 ist eine jeweilige vormalige Trennfuge 22 zwischen den Segmenten 20 angedeutet. Entlang dieser Trennfuge 22 ist im fertigen Zustand dann die Schweißnaht 24 ausgeführt, wodurch die Segmente 20 aneinandergefügt und gleichzeitig der so gebildete Axiallagerteil 8 unverlierbar, jedoch zumindest in axialer Richtung 10 geringfügig spielbehaftet an dem Radiallagerteil 4 angeordnet ist. Im beispielhaft und bevorzugt dargestellten Fall sind die jeweiligen Segmente 20 durch einen jeweiligen in radialer Richtung 14 erstreckten Rand 26 oder eine Flanke begrenzt. Mit diesem Rand 26 oder mit dieser Flanke liegen dann das mittlere Segment 20 und die hieran angrenzenden Segmente 20 eine Trennfuge 22 oder Stoßfuge bildend aneinander an und werden durch Anbringen der Schweißnaht 24 unlösbar aneinander gefügt.

Man erkennt am besten aus Figur 4, dass das dort dargestellte Segment 20 eine nach innen, also im Wesentlichen in der radialen Richtung 14 nach innen, vorstehende Haltezunge 28 aufweist. Die jeweilige Haltezunge 28 ist komplementär zu der schon erwähnten Halteausnehmung 18 des Radiallagerteils 4 ausgebildet, derart, dass ein jeweiliges Segment 20 im Bereich der axialen Stirnseite 6 des Radiallagerteils 4 angeordnet und in seine intendierte Montageposition gebracht werden kann, in welcher die jeweilige Haltezunge 28 in die zugeordnete Halteausnehmung 18 des Radiallagerteils 4 eingreift. In diesem Zustand liegen dann die Segmente 20 in Umfangsrichtung 12 mit ihren Rändern 26 im Wesentlichen wenigstens nahezu auf Stoß aneinander an, so dass sie durch Anbringen der jeweiligen Schweißnaht 24 unlösbar miteinander verbunden werden können. In der Folge ist dann auch das gesamte durch die beispielhaft drei Segmente 20 gebildete Axiallagerteil 8 zumindest in axialer Richtung 10 spielbehaftet, jedoch unlösbar am Radiallagerteil 4 gehalten, und zwar ohne dass materialverformende Massnahmen zur Erzielung einer Verliersicherung ausgeführt werden mussten. Die Spielbehaftung kommt dadurch zustande, dass die Halteausnehmungen 18 geringfügig größer dimensioniert sind als die darin eingreifenden Haltezungen 28. Dennoch ist nach dem Fügen der Segmente 20 aneinander ein Hintergriff bezüglich aller Richtungen und damit eine verliersichere Anordnung erreicht. Eine stoffschlüssige Verbindung zwischen Axiallagerteil 8 und Radiallagerteil 4 ist nicht vorhanden, wodurch auch die spielbehaftete Anordnung verhindert würde.

Des Weiteren erkennt man Schmiernuten 30, die sich in radialer Richtung 14 erstrecken und durch eine spanabhebende Bearbeitung ausgehend von einer Gleitfläche 32 des Axiallagerteils 8 bzw. eines Segments 20 hiervon ausgebildet ist.

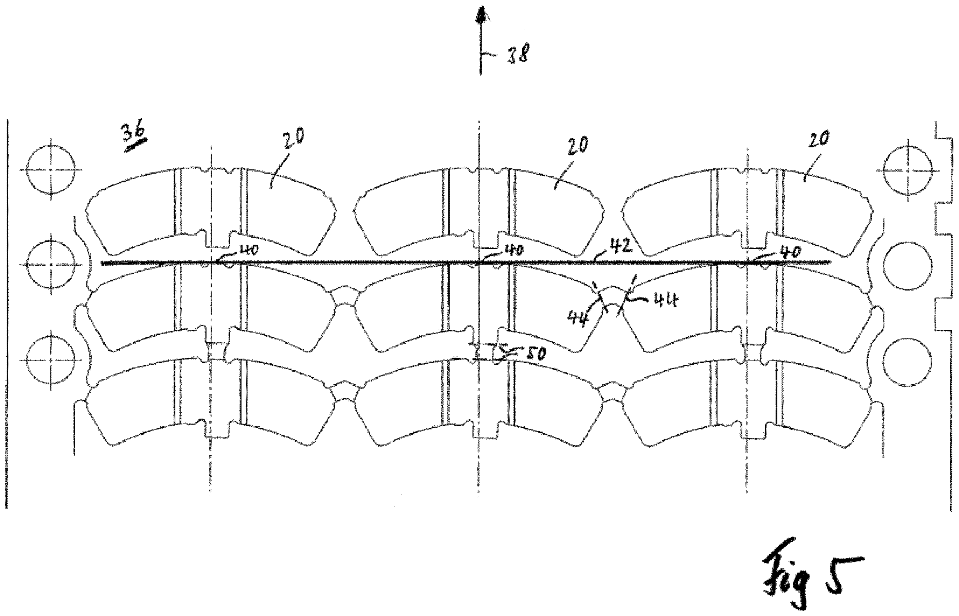

Schließlich ist in Figur 5 ein Flachmaterial 36, insbesondere ein metallischer Werkstoff oder Metallverbundwerkstoff 36 schematisch dargestellt, wobei auch eine Maschinenrichtung 38 für die Zuführung bzw. einen getakteten Vorschub des Flachmaterials 36 angedeutet ist. Weiter angedeutet ist ein Stanzmuster für die jeweiligen Segmente 20 zur Herstellung des Axiallagerteils 8. Die Segmente 20 sind im beispielhaft und bevorzugt dargestellten Fall orthogonal zur Maschinenrichtung 38 zu drei Stücken nebeneinander vorgesehen. Diese jeweils drei Segmente sind zur Maschinenrichtung 38 symmetrisch zueinander angeordnet, derart, dass ein jeweiliger Scheitelpunkt 40 eines jeweiligen Segments auf derselben Linie 42 orthogonal zur Maschinenrichtung 38 liegt. Es zeigt sich, dass durch die erfindungsgemäße Mehrteiligkeit des Axiallagerteils eine sehr wirtschaftliche Herstellung des Axiallagerteils 8 möglich ist, da der Schnittabfall erheblich reduziert werden kann. Ausgehend von dem in Figur 5 schematisch dargestellten Muster wird im Übergang zwischen zwei aneinander angrenzenden und noch aneinander angebundenen Segmenten 20 Trennschnitte 44 ausgeführt werden, die zu der in Figur 3 dargestellten Freischnittkontur 46 im Übergang eines radial äußeren Umfangsrands 48 zu dem nach radial innen verlaufenden Rand 26 führt. Ferner dargestellt ist, dass die Segmente 20 hier beispielhaft in der Maschinenrichtung 38 aneinander angebunden bleiben bis sie durch Vereinzelungsschnitte 50 voneinander getrennt werden.

## Patentansprüche

1. Gebaute halbschalenförmige Bundlagerschale (2) für eine Kurbelwellenlagerstelle bei einem Verbrennungsmotor, mit einer axialen Richtung (10), einer dazu konzentrischen Umfangsrichtung (12) und einer radialen Richtung (14), mit einem halbschalenförmigen Radiallagerteil (4) und mit einem im Bereich einer axialen Stirnseite (6) des Radiallagerteils (4) befestigbaren scheibenförmigen Axiallagerteil (8), wobei das Radiallagerteil (4) eine einem Gleitpartner zugewandte radial innere Gleitfläche (3) und einen in Umfangsrichtung (12) erstreckten Randbereich (16) aufweist und wobei das Axiallagerteil (8) im Wesentlichen in einer radialen Ebene, also orthogonal zur axialen Richtung (10) erstreckt ist und mindestens zwei im Wesentlichen in der radialen Ebene erstreckte und nach innen vorspringende Haltezungen (28) aufweist, die mit einer jeweiligen Halteausnehmung (18) in dem Randbereich (16) des Radiallagerteils (4) in Eingriff gebracht sind, wobei das Axiallagerteil (8) verliersicher am Radiallagerteil (4) gehalten ist, **dadurch gekennzeichnet, dass** das Axiallagerteil (8) aus wenigstens drei Segmenten (20) gebildet ist, die in der Umfangsrichtung (12) aneinander anschließen und über eine, vorzugsweise in radialer Richtung (14) erstreckte, Schweißnaht (24) zwischen je zwei Segmenten (20) unlösbar aneinandergefügt sind, wobei die jeweilige Schweißnaht (24) nicht den Radiallagerteil (4) erfasst und wobei die Segmente (20) zuerst am Randbereich (16) des Radiallagerteils (4) angeordnet werden, so dass die Haltezungen (28) in die jeweiligen Halteausnehmungen (18) in dem Randbereich (16) des Radiallagerteils (4) eingreifen, und erst dann die jeweilige Schweißnaht (24) zwischen je zwei Segmenten (20) angebracht wird, wodurch dann das so gebildete Axiallagerteil (8) verliersicher jedoch zumindest in axialer Richtung (10) geringfügig spielbehaftet am Radiallagerteil (4) gehalten ist, und zwar ohne dass die Haltezungen (28) oder der Randbereich (16) des Radiallagerteils (4) materialumformend bearbeitet worden sind.

2. Bundlagerschale nach Anspruch 1, **dadurch gekennzeichnet, dass** die mehreren Segmente (20) nicht alle aus denselben Materialien oder demselben Materialaufbau gebildet sind.

3. Bundlagerschale nach Anspruch 1 oder 2, **dadurch gekennzeichnet**, **gekennzeichnet durch** mindestens ein Segment (20), welches aus einem Metall/Kunststoffverbundwerkstoff gebildet ist.

4. Bundlagerschale nach Anspruch 3, **dadurch gekennzeichnet, dass** der Metall/Kunststoffverbundwerkstoff eine metallische Stützschicht, insbesondere aus Stahl, eine darauf aufgebrachte dreidimensional poröse Trägerschicht für ein darin einimprägniertes Gleitmaterial auf Polymerbasis, sowie dieses Gleitmaterial, vorzugsweise mit tribologisch wirksamen Füllstoffen aufweist.

5. Bundlagerschale nach einem oder mehreren der vorstehenden Ansprüche, **dadurch gekennzeichnet, dass** alle Segmente (20) eine vorzugsweise im Wesentlichen nach radial innen erstreckte Haltezunge (28) aufweisen.

6. Bundlagerschale nach einem oder mehreren der vorstehenden Ansprüche, **dadurch gekennzeichnet, dass** zur Bildung eines jeweiligen Axiallagerteils (8) drei Segmente (20) vorgesehen sind.

7. Bundlagerschale nach Anspruch 6 einem oder mehreren der vorstehenden Ansprüche, **dadurch gekennzeichnet, dass** die drei Segmente (20) jeweils eine Umfangslänge von 55° - 65°, insbesondere von etwa 60° aufweisen oder dass zwei Segmente eine kürzere Umfangslänge aufweisen als ein zwischen Ihnen liegendes Segment.

8. Bundlagerschale nach einem oder mehreren der vorstehenden Ansprüche, **gekennzeichnet durch** Segmente mit unterschiedlicher Umfangslänge.

9. Bundlagerschale nach einem oder mehreren der vorstehenden Ansprüche, **dadurch gekennzeichnet, dass** das jeweilige Segment (20) in radialer Richtung (14) außen im Übergang zu einem benachbarten Segment (20) einen Freischnitt (44) aufweist.

10. Verfahren zum Herstellen einer gebauten halbschalenförmigen Bundlagerschale (2) nach einem oder mehreren der vorstehenden Ansprüche, **dadurch gekennzeichnet, dass** aus einem Flachmaterial (36) jeweiligen den Axiallagerteil (8) bildenden Segmente (20) herausgeformt, insbesondere ausgestanzt werden, dass diese Segmente (20) an dem halbschalenförmigen Radiallagerteil (4) in eine intendierte Montagestellung gebracht werden, in der die jeweiligen Haltezungen (28) der Segmente (20) in eine jeweilige Halteausnehmung (18) am Randbereich (16) des Radiallagerteils (4) eingreifen, und dass daran anschließend eine Schweißnaht (24) zwischen je zwei Segmenten (20) ausgebildet wird und hierdurch der Axiallagerteil (8) verliersicher jedoch geringfügig spielbehaftet am Radiallagerteil (4) gehalten ist, und zwar ohne dass die Haltezungen (28) oder der Randbereich (16) des Radiallagerteils (4) materialumformend bearbeitet worden sind.

11. Verfahren nach Anspruch 10, **dadurch gekennzeichnet, dass** die einen jeweiligen Axiallagerteil (8) bildenden Segmente (20) in dem Flachmaterial (36) jeweils orthogonal zu einer Maschinenrichtung (38) des Flachmaterials (36) und des Herstellvorgangs der Segmente (20) nebeneinander zum Herausformen vorgesehen sind.

## Claims

1. An assembled half shell-shaped flanged bearing shell (2) for a crankshaft bearing point in an internal combustion engine, having an axial direction (10), a circumferential direction (12) concentric with respect to the axial direction, and a radial direction (14), and having a half shell-shaped radial bearing part (4) and having a disk-shaped axial bearing part (8) that is fastenable in the area of an axial end-face side (6) of the radial bearing part (4), wherein the radial bearing part (4) has a radially inner sliding surface (3) facing a sliding partner, and an edge area (16) that extends in the circumferential direction (12), and wherein the axial bearing part (8) extends essentially in a radial plane, i.e., orthogonally with respect to the axial direction (10), and has at least two inwardly projecting retaining tongues (28) that extend essentially in the radial plane and that are brought into engagement with a respective retaining recess (18) in the edge area (16) of the radial bearing part (4), wherein the axial bearing part (8) is captively held at the radial bearing part (4), **characterized in that** the axial bearing part (8) is formed from at least three segments (20) that adjoin one another in the circumferential direction (12) and that are nonreleasably joined together via a weld seam (24), preferably extending in the radial direction (14), between every two segments (20), wherein the respective weld seam (24) does not include the radial bearing part (4), and wherein the segments (20) with their retaining tongues (28) are first arranged at the edge area (16) of the radial bearing part (4) so that the retaining tongues (28) engage with the respective retaining recesses (18) in the edge area (16) of the radial bearing part (4), and only then is the respective weld seam (24) applied between respective two segments (20), as a result of which the axial bearing part (8) thus formed is captively held at the radial bearing part (4) but with slight play, at least in the axial direction (10), and without the retaining tongues (28) or the edge area (16) of the radial bearing part (4) having been processed in a material-deforming manner.

2. The flanged bearing shell according to Claim 1, **characterized in that** the multiple segments (20) are not all made of the same materials or do not all have the same material composition.

3. The flanged bearing shell according to Claim 1 or 2, **characterized in that characterized by** at least one segment (20) that is made of a metal/plastic composite.

4. The flanged bearing shell according to Claim 3, **characterized in that** the metal/plastic composite has a metallic support layer, in particular made of steel, a three-dimensionally porous support layer applied thereto for a polymer-based sliding material impregnated therein, and this sliding material, preferably with tribologically active fillers.

5. The flanged bearing shell according to one or more of the preceding claims, **characterized in that** all segments (20) have a retaining tongue (28) that preferably extends essentially radially inwardly.

6. The flanged bearing shell according to one or more of the preceding claims, **characterized in that** three segments (20) are provided for forming a particular axial bearing part (8).

7. The flanged bearing shell according to Claim 6 one or more of the preceding claims, **characterized in that** the three segments (20) each have a circumferential length of 55°-65°, in particular approximately 60°, or that two segments have a shorter circumferential length than a segment situated between them.

8. The flanged bearing shell according to one or more of the preceding claims, **characterized by** segments having different circumferential lengths.

9. The flanged bearing shell according to one or more of the preceding claims, **characterized in that** the particular segment (20) in the radial direction (14) has a cutout (44) on the outside in the transition to an adjacent segment (20).

10. A method for manufacturing an assembled half shell-shaped flanged bearing shell (2) according to one or more of the preceding claims, **characterized in that** segments (20) that form the particular axial bearing part (8) are formed, in particular punched, from a flat material (36), that these segments (20) on the half shell-shaped radial bearing part (4) are brought into an intended assembly position in which the particular retaining tongues (28) of the segments (20) engage with a respective retaining recess (18) on the edge area (16) of the radial bearing part (4), and that a weld seam (24) is subsequently provided between respective two segments (20), and that the axial bearing part (8) is hereby captively held on the radial bearing part (4) but with slight play, and without the retaining tongues (28) or the edge area (16) of the radial bearing part (4) having been processed in a material-deforming manner.

11. The method according to Claim 10, **characterized in that** the segments (20) that form a particular axial bearing part (8) are in the flat material (36) in each case provided orthogonally with respect to a machine direction (38) of the flat material (36) and the operation for manufacturing the segments (20) next to one another for forming.

## Revendications

1. Coussinet de palier à bride (2) réalisé en forme de demi-coque et destiné à un logement de vilebrequin dans un moteur à combustion interne, avec une direction axiale (10), une direction périphérique (12) concentrique et une direction radiale (14), avec une partie palier radiale (4) en forme de demi-coque et avec une partie palier axiale (8) en forme de disque pouvant être fixée dans la région d'une face frontale axiale (6) de la partie palier radiale (4), dans lequel la partie palier radiale (4) présente une surface de glissement (3) radialement intérieure tournée vers un partenaire de glissement et une région de bord (16) s'étendant dans la direction circonférentielle (12) et dans lequel la partie palier axiale (8) s'étend essentiellement dans un plan radial, c'est-à-dire de manière orthogonale par rapport à la direction axiale (10) et présente au moins deux languettes de retenue (28) s'étendant essentiellement dans le plan radial et faisant saillie vers l'intérieur et qui sont mises en prise avec un évidement de retenue (18) respectif dans la région de bord (16) de la partie palier radiale (4), dans lequel la partie palier axiale (8) est maintenue captive au niveau de la partie palier radiale (4), **caractérisé en ce que** la partie palier axiale (8) est formée d'au moins trois segments (20) qui sont adjacents les uns aux autres dans la direction circonférentielle (12) et sont assemblés bout à bout de manière inamovible entre respectivement deux segments (20) par l'intermédiaire d'un cordon de soudure (24) s'étendant de manière préférée dans la direction radiale (14), dans lequel le cordon de soudure (24) respectif ne vient pas sur la partie palier radiale (4) et dans lequel les segments (20) sont d'abord agencés au niveau de la région de bord (16) de la partie palier radiale (4) de sorte que les languettes de retenue (28) viennent en prise dans les évidements de retenue (18) respectifs dans la région de bord (16) de la partie palier radiale (4) et ce n'est qu'ensuite que le cordon de soudure (24) respectif est appliqué entre respectivement deux segments (20), ce qui a pour effet que la partie palier axiale (8) ainsi formée est retenue captive au niveau de la partie palier radiale (4) avec cependant un jeu léger au moins dans la direction axiale (10), et ce sans que les languettes de retenue (20) ou la région de bord (16) de la partie palier radiale (4) n'aient été façonnées par déformation de matériau.

2. Coussinet de palier à bride selon la revendication 1, **caractérisé en ce que** la pluralité de segments (20) ne sont pas tous formés à partir des mêmes matériaux ou de la même structure matérielle.

3. Coussinet de palier à bride selon la revendication 1 ou 2, **caractérisé par** au moins un segment (20) formé à partir d'un matériau composite métal/plastique.

4. Coussinet de palier à bride selon la revendication 3, **caractérisé en ce que** le matériau composite métal/plastique présente une couche d'appui métallique, en particulier en acier, une couche de support poreuse tridimensionnelle appliquée sur ladite couche d'appui et destinée à un matériau de glissement à base de polymère dont elle est imprégnée, ainsi que ledit matériau de glissement, de manière préférée avec des matières de charge tribologiquement actives.

5. Coussinet de palier à bride selon l'une quelconque ou plusieurs des revendications précédentes, **caractérisé en ce que** tous les segments (20) présentent une languette de retenue (28) s'étendant de manière préférée essentiellement radialement vers l'intérieur.

6. Coussinet de palier à bride selon l'une quelconque ou plusieurs des revendications précédentes, **caractérisé en ce que** trois segments (20) sont prévus pour former une partie palier axiale (8) respective.

7. Coussinet de palier à bride selon la revendication 6 ou l'une quelconque ou plusieurs des revendications précédentes, **caractérisé en ce que** les trois segments (20) présentent respectivement une longueur circonférentielle de 55° à 65°, en particulier d'environ 60°, ou **en ce que** deux segments présentent une longueur circonférentielle inférieure à celle d'un segment situé entre ceux-ci.

8. Coussinet de palier à bride selon l'une quelconque ou plusieurs des revendications précédentes, **caractérisé par** des segments de longueurs circonférentielles différentes.

9. Coussinet de palier à bride selon l'une quelconque ou plusieurs des revendications précédentes, **caractérisé en ce que** le segment (20) respectif présente une découpe libre (44) à l'extérieur dans le sens radial (14) au niveau du passage à un segment (20) adjacent.

10. Procédé de fabrication d'un coussinet de palier à bride (2) réalisé en forme de demi-coque selon l'une quelconque ou plusieurs des revendications précédentes, **caractérisé en ce que** des segments (20) formant respectivement la partie palier axiale (8) sont formés, en particulier découpés, à partir d'un matériau plat (36), **en ce que** lesdits segments (20) sont placés au niveau de la partie palier radiale (4) en forme de demi-coque dans une position d'assemblage prévue dans laquelle les languettes de retenue (28) respectives des segments (20) viennent en prise dans un évidement de retenue (18) respectif au niveau de la région de bord (16) de la partie palier radiale (4), et **en ce qu'**un cordon de soudure (24) est ensuite réalisé entre respectivement deux segments (20) et la partie palier axiale (8) est ainsi retenue captive au niveau de la partie palier radiale (4) avec cependant un léger jeu, et ce sans que les languettes de retenue (28) ou la région de bord (16) de la partie palier radiale (4) n'aient été façonnées par déformation de matériau.

11. Procédé selon la revendication 10, **caractérisé en ce qu'**il est prévu que les segments (20) formant une partie palier axiale (8) respective soient juxtaposés au sein du matériau plat (36) en vue du formage, respectivement de manière orthogonale par rapport à un sens machine (38) du matériau plat (36) et à l'opération de production des segments (20).
